(19) Europäisches Patentamt
European Patent Office
Office européen des brevets

(11) **EP 4 249 245 A1**

(12) **EUROPEAN PATENT APPLICATION**
published in accordance with Art. 153(4) EPC

(43) Date of publication:
**27.09.2023 Bulletin 2023/39**

(21) Application number: **21894450.2**

(22) Date of filing: **29.10.2021**

(51) International Patent Classification (IPC):
**B32B 27/32** (2006.01)  **B32B 7/022** (2019.01)
**B65D 65/02** (2006.01)

(52) Cooperative Patent Classification (CPC):
**B32B 7/022; B32B 27/32; B65D 65/02**

(86) International application number:
**PCT/JP2021/040056**

(87) International publication number:
**WO 2022/107576 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.11.2020 JP 2020192766**

(71) Applicant: TOYOBO CO., LTD.
**Osaka-shi
Osaka 5300001 (JP)**

(72) Inventors:
• **TOMATSU Wakato**
**Inuyama-shi Aichi 484-8508 (JP)**
• **NISHI Tadashi**
**Inuyama-shi Aichi 484-8508 (JP)**
• **YAMAUCHI Sakie**
**Inuyama-shi Aichi 484-8508 (JP)**

(74) Representative: **Vossius & Partner
Patentanwälte Rechtsanwälte mbB
Siebertstraße 3
81675 München (DE)**

(54) **POLYOLEFIN-BASED RESIN FILM, AND LAMINATE IN WHICH SAME IS USED**

(57) An object of the present invention is to provide a multilayer body that includes a base film such as a biaxially oriented polyamide resin film having high strength and a polyolefin resin film, and that has high bag breakage resistance and bending pinhole resistance while having high heat-sealing strength. A multilayer body comprising: a polyolefin resin film that satisfies the following 1) to 3) and includes a polypropylene resin composition that contains a propylene-α-olefin random copolymer; and a biaxially stretched nylon film, wherein the multilayer body satisfies the following 4) to 6), 1) a sealing layer, a core layer, and a laminate layer are included in order, respectively, 2) a content of linear low-density polyethylene in the polypropylene resin composition constituting the sealing layer is not larger than 3% by weight, 3) a content of linear low-density polyethylene in the polypropylene resin composition constituting each of the core layer and the laminate layer is not smaller than 3% by weight and not larger than 50% by weight, 4) the number of pinholes of the multilayer body is not larger than 35 after bending the multilayer body 1000 times at 1°C, 5) the multilayer body has a piercing strength of not smaller than 10 N, and 6) the multilayer body has a heat-sealing strength of not smaller than 20 N/15 mm.

EP 4 249 245 A1

## Description

TECHNICAL FIELD

The present invention relates to a polyolefin resin film. Furthermore, the present invention relates to a multilayer body that includes the polyolefin resin film, and a biaxially oriented film formed of at least one polymer selected from the group consisting of a polyamide resin film, a polyester resin film, and a polypropylene resin film.

BACKGROUND ART

A packaging body is produced mainly by heat-pressing (hereinafter, heat-sealing) peripheral portions of multilayer bodies each of which includes a base film such as a polyamide resin film, a polyester resin film, or a polypropylene resin film, and the polyolefin resin film as a sealant, at a temperature near a melting point of the polyolefin resin film, in a state where the polyolefin resin film surfaces are in contact with each other.

These packaging bodies are used for packaging and transporting various foods such as perishable foods, daily dishes, and confectioneries. By using the packaging bodies, foods can be efficiently delivered to consumers, and, furthermore, rotting of foods can be delayed to prolong the best before date, and mixing of dust or the like during transportation or storage can be avoided.

A polypropylene resin film is low-priced, and a packaging material in which a polypropylene resin film is used has excellent thermal sealing (heat-sealing) properties, and a polypropylene resin film is widely used as a heat-sealing film.

The packaging material is required to have high heat-sealing strength and bag breakage resistance, and the number of pinholes caused by bending of a packaging body during transportation is also required to be small. Particularly, it has been known that a packaging body in which a film such as a biaxially oriented polyamide resin film having high strength is used as a base film, has enhanced heat-sealing strength and bag breakage resistance.

However, the performance is required to be further enhanced, and bag breakage resistance of a heat-sealing film is also examined so as to be enhanced.

Furthermore, a technique in which block polypropylene resin is used and polyethylene resin is added has been known (for example, see Patent Literature 1 and the like).

However, block polypropylene resin has poor transparency and has a high heat-sealing start temperature.

Therefore, a technique in which linear low-density polyethylene is added to a polypropylene resin film has been known (for example, see Patent Literature 2 and the like).

However, in a case where the polypropylene resin film and a base film such as a biaxially oriented polyamide resin film having high strength are stacked, heat-sealing strength becomes low. This problem is not significant in a case where a polypropylene film having low strength is used as a base.

CITATION LIST

PATENT LITERATURE

[PTL 1] Japanese Laid-Open Patent Publication No. 2017-132186
[PTL 2] Japanese Laid-Open Patent Publication No. 2020-75400

SUMMARY OF THE INVENTION

PROBLEMS TO BE SOLVED BY THE INVENTION

An object of the present invention is to provide a multilayer body that includes a base film such as a biaxially oriented polyamide resin film having high strength and a polyolefin resin film, and that has high bag breakage resistance and bending pinhole resistance while having high heat-sealing strength.

As a result of thorough research for achieving the aforementioned object, the inventors of the present invention have found that, by controlling a dispersed state of linear low-density polyethylene in a polypropylene resin film formed of a polypropylene resin composition containing propylene-$\alpha$-olefin random copolymer, even a multilayer body of the polypropylene resin film and a base film such as a biaxially oriented polyamide resin film having high strength has enhanced bag breakage resistance and bending pinhole resistance while having high heat-sealing strength, and have completed the present invention.

That is, the present invention has the following aspects.

[1] A multilayer body comprising:

a polyolefin resin film that satisfies the following 1) to 3) and includes a polypropylene resin composition that contains a propylene-α-olefin random copolymer; and
a biaxially stretched nylon film, wherein
the multilayer body satisfies the following 4) to 6),

1) a sealing layer, a core layer, and a laminate layer are included in order, respectively,
2) a content of linear low-density polyethylene in the polypropylene resin composition constituting the sealing layer is not larger than 3% by weight,
3) a content of linear low-density polyethylene in the polypropylene resin composition constituting each of the core layer and the laminate layer is not smaller than 3% by weight and not larger than 50% by weight,
4) the number of pinholes of the multilayer body is not larger than 35 after bending the multilayer body 1000 times at 1°C,
5) the multilayer body has a piercing strength of not smaller than 10 N, and
6) the multilayer body has a heat-sealing strength of not smaller than 20 N/15 mm.

[2] The multilayer body according to the above [1], wherein the polyolefin resin film has a Young's modulus of not smaller than 400 MPa and not larger than 800 MPa in a longitudinal direction and a width direction.
[3] The multilayer body according to the above [1] or [2], wherein the polyolefin resin film has a thickness of not smaller than 15 $\mu$m and not larger than 80 $\mu$m.
[4] The multilayer body according to any one of the above [1] to [3], wherein the linear low-density polyethylene has a density of not smaller than 910 kg/m$^3$ and not larger than 935 kg/m$^3$, and has a melt flow rate of not smaller than 2.0 g/10 min and not larger than 7.0 g/10 min.
[5] The multilayer body according to any one of the above [1] to [4], wherein the linear low-density polyethylene is linear low-density polyethylene obtained by polymerizing ethylene containing plant-derived ethylene.

EFFECTS OF THE INVENTION

The polyolefin resin film of the present invention is appropriate for providing a polyolefin resin film having high bag breakage resistance while having high heat-sealing strength.

**DESCRIPTION OF EMBODIMENTS**

The present invention will be described below in detail. A polyolefin resin film of the present invention is formed of a polypropylene resin composition that contains a propylene-α-olefin random copolymer.

(Sealing layer)

(Propylene-α-olefin random copolymer)

In the present invention, a polypropylene resin composition constituting a sealing layer contains a propylene-α-olefin random copolymer from the viewpoint of heat-sealing strength.
Examples of the propylene-α-olefin random copolymer include at least one kind of copolymer of propylene and an α-olefin in which the number of carbon atoms is 2 or 4 to 20 and which is different from propylene. As the α-olefin monomer in which the number of carbon atoms is 2 or 4 to 20, ethylene, butene-1, pentene-1, 4-methylpentene-1, hexene-1, octene-1, or the like can be used.
For the propylene-α-olefin random copolymer, ethylene is preferably used as the α-olefin in which the number of carbon atoms is 2 or 4 to 20 and which is different from propylene, from the viewpoint of heat-sealability. Furthermore, at least one kind of the propylene-α-olefin random copolymer may be used, and two or more kinds of the propylene-α-olefin random copolymers may be mixed and used as appropriate. A propylene-ethylene-butene random copolymer in which the main monomer is propylene, and certain amounts of ethylene and butene are copolymerized, is particularly preferable. In the description herein, monomers are referred to and described in the order starting from a monomer having the largest monomer composition ratio in the monomers constituting the random copolymer.
The lower limit of a melt flow rate (MFR) of the propylene-α-olefin random copolymer is preferably 0.6 g/10 min, more preferably 1.0 g/10 min, and even more preferably 1.2 g/10 min. A melt flow rate of smaller than 0.6 g/10 min may degrade uniformity of the film thickness. The upper limit of the melt flow rate of the random copolymer is preferably 12.0 g/10 min, more preferably 9.0 g/10 min, and even more preferably 8.0 g/10 min.

Specific examples of the propylene-$\alpha$-olefin random copolymer include a propylene-ethylene random copolymer (Prime Polypro F-724NPC manufactured by Prime Polymer Co., Ltd., the MFR is 7.0 g/10 min at 230°C and a load of 2.16 kg, the melting point is 142°C), a propylene-ethylene-butene random copolymer (Sumitomo NOBLEN FL8115A manufactured by SUMITOMO CHEMICAL COMPANY, LIMITED, the MFR is 7.0 g/10 min at 230°C and a load of 2.16 kg, the melting point is 148°C), a propylene-ethylene-butene random copolymer (Prime Polypro F-794NV manufactured by Prime Polymer Co., Ltd., the MFR is 5.7 g/10 min at 230°C and a load of 2.16 kg, the melting point is 134°C), and a propylene-ethylene-butene random copolymer (Sumitomo NOBLEN FL6745A manufactured by SUMITOMO CHEMICAL COMPANY, LIMITED, the MFR is 6.0 g/10 min at 230°C and a load of 2.16 kg, the melting point is 130°C).

A content of the propylene-$\alpha$-olefin random copolymer in the polypropylene resin composition constituting the sealing layer is preferably not smaller than 94% by weight, more preferably not smaller than 97% by weight, even more preferably not smaller than 99% by weight, and particularly preferably 100% by weight, from the viewpoint of heat-sealing strength.

(Propylene homopolymer)

In the present invention, the polypropylene resin composition constituting the sealing layer contains propylene homopolymer, whereby slipperiness can be enhanced. The propylene homopolymer to be used is, but is not particularly limited to, preferably isotactic polypropylene from the viewpoint of blocking resistance.

The melt flow rate (MFR) (measured at 230°C and a load of 2.16 kg) of the propylene homopolymer is, but is not particularly limited to, preferably not smaller than 1.0 g/10 min and not larger than 10.0 g/10 min, and more preferably not smaller than 2.0 g/min and not larger than 8.0 g/min. If the melt flow rate is smaller than 1 g/10 min, the viscosity is excessively high, and extrusion by a T-die is difficult. Meanwhile, if the melt flow rate is larger than 10 g/10 min, the film has poor stickiness or the film has low impact resistance strength (impact strength). Specifically, for example, the propylene homopolymer FLX80E4 (the MFR is 7.5 g/10 min, the melting point is 164°C) manufactured by SUMITOMO CHEMICAL COMPANY, LIMITED, can be used.

A content of the propylene homopolymer in the polypropylene resin composition constituting the sealing layer is preferably not larger than 3% by weight, more preferably 2% by weight, even more preferably not larger than 1% by weight, and particularly preferably 0% by weight, from the viewpoint of heat-sealing strength. If a content of polyethylene resin such as linear low-density polyethylene is large in the heat sealing layer, poor compatibility between the propylene homopolymer and the polyethylene resin may reduce heat-sealing strength.

(Linear low-density polyethylene)

The polypropylene resin composition constituting the sealing layer contains linear low-density polyethylene, whereby the bending pinhole resistance can be enhanced. The linear low-density polyethylene can be, for example, produced by a production method such a high-pressure method, a solution method, and a gas phase method. Examples of the linear low-density polyethylene include a copolymer of ethylene and at least one kind of $\alpha$-olefin in which the number of carbon atoms is not smaller than three. The $\alpha$-olefin may be an olefin generally called $\alpha$-olefin, and is preferably C3 to C12 $\alpha$-olefin such as propylene, butene-1, hexene-1, octene-1, and 4-methyl-1-pentene. Examples of the copolymer of ethylene and the $\alpha$-olefin include ethylene-hexene-1 copolymer, ethylene-butene-1 copolymer, and ethylene-octene-1 copolymer. From the viewpoint of bending pinhole resistance, an ethylene-hexene copolymer is preferable.

(Plant-derived linear low-density polyethylene)

The linear low-density polyethylene may contain plant-derived linear low-density polyethylene obtained by polymerizing ethylene derived from a plant such as sugar cane and an $\alpha$-olefin such as ethylene derived from fossil fuel such as petroleum or a plant.

Although the plant-derived linear low-density polyethylene has almost the same physical properties as fossil fuel-derived linear low-density polyethylene, the plant-derived linear low-density polyethylene has an effect of reducing generated carbon dioxide and can mitigate global warming from the viewpoint of carbon neutrality. The lower limit of a content of the plant-derived ethylene in the plant-derived linear low-density polyethylene is preferably 50% and more preferably 80%. In a case where the lower limit is not smaller than 50%, an effect of reducing carbon dioxide is preferably exhibited. The upper limit is preferably 98% and more preferably 96%. If the upper limit is larger than 98%, a proportion of an $\alpha$-olefin to be copolymerized is reduced and bending pinhole resistance is reduced.

The lower limit of the MFR (measured at 190°C and 2.18 kg) of the linear low-density polyethylene is preferably 1.0 g/10 min and more preferably 2.0 g/10 min. The upper limit is preferably 7.0 g/min and more preferably 5.0. In a case where the MFR is in the above-described range, compatibility with polypropylene resin is good, and sealing strength is made high.

The lower limit of the density of the linear low-density polyethylene is preferably 910 kg/m³ and more preferably 913 kg/m³. In a case where the lower limit is not smaller than 910 kg/m³, blocking resistance is made good. The upper limit is 935 kg/m³ and more preferably 930 kg/m³. In a case where the upper limit is not smaller than and not larger than 930 kg/m³, bag breakage resistance is made good. Specifically, for example, an ethylene-hexene copolymer (plant-derived linear low-density polyethylene) SLH218 (the MFR is 2.3 g/min, the density is 916 kg/m³, the melting point is 126°C) manufactured by Braskem, or an ethylene-hexene copolymer (fossil fuel-derived linear low-density polyethylene) FV405 (the MFR is 4.0 g/min, the density is 923 kg/m³, the melting point is 118°C) manufactured by SUMITOMO CHEMICAL COMPANY, LIMITED, may be used.

A content of the linear low-density polyethylene in the polypropylene resin composition constituting the sealing layer is preferably not larger than 3% by weight, more preferably 2% by weight, even more preferably not larger than 1% by weight, and particularly preferably 0% by weight, from the viewpoint of heat-sealing strength.

Slipperiness substantially depends on an added amount of an additive such as an anti-blocking agent and an organic lubricant. Therefore, addition of the linear low-density polyethylene to the sealing layer does not affect slipperiness as much.

(Additive)

A polyolefin resin composition constituting the sealing layer of the present invention may contain an anti-blocking agent. One kind of anti-blocking agent may be contained. However, in a case where two or more kinds of inorganic particles having different particle diameters and shapes are blended, protrusions can be complicated also on the unevenness on the film surface, and a blocking preventing effect can be further enhanced.

The anti-blocking agent to be added is, but is not particularly limited to, inorganic particles such as spherical silica, amorphous silica, zeolite, talc, mica, alumina, hydrotalcite, and aluminum borate, and organic particles such as polymethyl methacrylate and ultrahigh molecular weight polyethylene.

An amount of the anti-blocking agent contained in the polypropylene resin composition constituting the sealing layer is preferably not larger than 3000 ppm and more preferably not larger than 2500 ppm, with respect to polyolefin resin in a layer to which the anti-blocking agent is added. In a case where the amount of the anti-blocking agent is not larger than 3000 ppm, dropping of the anti-blocking agent can be reduced. The amount of the anti-blocking agent is preferably not smaller than 500 ppm and more preferably not smaller than 1000 ppm. In a case where the amount of the anti-blocking agent is not smaller than 500 ppm, the anti-blocking properties can be made good.

The polyolefin resin composition may contain an organic lubricant. Slipperiness and a blocking preventing effect of the multilayer film are enhanced, and handleability of the film is made good. This is because bleed-out of the organic lubricant occurs, and the organic lubricant is on the film surface, so that the lubricant effect and a mold releasing effect are considered to be exhibited.

The organic lubricant preferably has a melting point of not lower than an ordinary temperature. Examples of the organic lubricant include fatty acid amide and fatty acid ester.

Specific examples of the organic lubricant include oleic acid amide, erucic acid amide, behenic acid amide, ethylene bis oleic acid amide, hexamethylene bis oleic acid amide, and ethylene bis oleic acid amide. Although one of them may be used solely, two or more kinds thereof are preferably used in combination since slipperiness and a blocking preventing effect can be maintained also in a severe environment.

An amount of the organic lubricant in the polypropylene resin composition is preferably not larger than 1500 ppm and more preferably not larger than 1000 ppm, with respect to the polyolefin resin. In a case where the amount of the organic lubricant is not larger than 1500 ppm, blocking is unlikely to occur even in storage in a place such as a warehouse subjected to a high temperature in summer. The amount of the organic lubricant is preferably not smaller than 200 ppm and more preferably not smaller than 250 ppm. In a case where the amount of the organic lubricant is not smaller than 200 ppm, slipperiness can be made good.

The polyolefin resin composition constituting the sealing layer of the present invention can contain other additives such as an antioxidant, an antistatic agent, an antifogging agent, a neutralizer, a nucleating agent, and a coloring agent, an anorganic filler, and the like in an appropriate amount in any layer as necessary without departing from the object of the present invention.

As the antioxidant, a phenol-based antioxidant and a phosphite-based antioxidant may be used in combination, or an antioxidant having a phenol-based backbone and a phosphite-based backbone in one molecule may be used solely. Examples of the neutralizer include calcium stearate.

(Core layer)

(Propylene-α-olefin random copolymer)

In the present invention, a polypropylene resin composition constituting a core layer contains a propylene-α-olefin random copolymer from the viewpoint of heat-sealing strength.

Examples of the propylene-α-olefin random copolymer include at least one kind of copolymer of propylene and an α-olefin in which the number of carbon atoms is 2 or 4 to 20 and which is different from propylene. As the α-olefin monomer in which the number of carbon atoms is 2 or 4 to 20, ethylene, butene-1, pentene-1, 4-methylpentene-1, hexene-1, octene-1, or the like can be used.

For the propylene-α-olefin random copolymer, ethylene is preferably used as the α-olefin in which the number of carbon atoms is 2 or 4 to 20 and which is different from propylene, from the viewpoint of heat-sealability. Furthermore, at least one kind of the propylene-α-olefin random copolymer may be used, and two or more kinds of the propylene-α-olefin random copolymers may be mixed and used as appropriate. A propylene-ethylene-butene random copolymer in which the main monomer is propylene, and certain amounts of ethylene and butene are copolymerized, is particularly preferable. In the description herein, monomers are referred to and described in the order starting from a monomer having the largest monomer composition ratio in the monomers constituting the random copolymer.

The lower limit of a melt flow rate (MFR) of the propylene-α-olefin random copolymer in the core layer is preferably 0.6 g/10 min, more preferably 1.0 g/10 min, and even more preferably 1.2 g/10 min. A melt flow rate of 0.6 g/10 min may degrade uniformity of the film thickness. The upper limit of the melt flow rate of the random copolymer is preferably 12.0 g/10 min, more preferably 9.0 g/10 min, and even more preferably 8.0 g/10 min.

Specific examples of the propylene-α-olefin random copolymer include a propylene-ethylene random copolymer (Prime Polypro F-724NPC manufactured by Prime Polymer Co., Ltd., the MFR is 7.0 g/10 min at 230°C and a load of 2.16 kg, the melting point is 142°C), a propylene-ethylene-butene random copolymer (Sumitomo NOBLEN FL8115A manufactured by SUMITOMO CHEMICAL COMPANY, LIMITED, the MFR is 7.0 g/10 min at 230°C and a load of 2.16 kg, the melting point is 148°C), a propylene-ethylene-butene random copolymer (Prime Polypro F-794NV manufactured by Prime Polymer Co., Ltd., the MFR is 5.7 g/10 min at 230°C and a load of 2.16 kg, the melting point is 134°C), and a propylene-ethylene-butene random copolymer (Sumitomo NOBLEN FL6745A manufactured by SUMITOMO CHEMICAL COMPANY, LIMITED, the MFR is 6.0 g/10 min at 230°C and a load of 2.16 kg, the melting point is 130°C).

A content of the propylene-α-olefin random copolymer in the polypropylene resin composition constituting the core layer is preferably not smaller than 25% by weight, more preferably not smaller than 40% by weight, even more preferably not smaller than 60% by weight, particularly preferably not smaller than 75% by weight, and particularly preferably not smaller than 80% by weight, from the viewpoint of heat-sealing strength. The content of the propylene-α-olefin random copolymer is preferably not larger than 97% by weight, more preferably not larger than 90% by weight, and even more preferably not larger than 85% by weight, from the viewpoint of bending pinhole resistance.

(Propylene homopolymer)

In the present invention, the polypropylene resin composition constituting the core layer contains propylene homopolymer, whereby heat resistance can be enhanced. The propylene homopolymer to be used is preferably isotactic polypropylene that has high crystallinity and can inhibit degradation of a heat shrinkage rate.

The melt flow rate (MFR) (measured at 230°C and a load of 2.16 kg) of the propylene homopolymer is, but is not particularly limited to, preferably not smaller than 1.0 g/10 min and not larger than 10.0 g/10 min, and more preferably not smaller than 2.0 g/min and not larger than 8.0 g/min. If the melt flow rate is smaller than 1 g/10 min, the viscosity is excessively high, and extrusion by a T-die is difficult. Meanwhile, if the melt flow rate is larger than 10 g/10 min, the film has poor stickiness or the film has low impact resistance strength (impact strength). Specifically, for example, a propylene homopolymer FLX80E4 (the MFR is 7.5 g/10 min, the melting point is 164°C) manufactured by SUMITOMO CHEMICAL COMPANY, LIMITED, can be used.

A content of the propylene homopolymer in the polypropylene resin composition constituting the core layer is preferably not smaller than 30% by weight and more preferably not smaller than 40% by weight, from the viewpoint of heat resistance. The content of the propylene homopolymer is preferably not larger than 50% by weight, more preferably not larger than 30% by weight, even more preferably not larger than 10% by weight, and particularly preferably 0% by weight, from the viewpoint of heat-sealing strength and bag breakage resistance.

Slipperiness heavily depends on an added amount of an additive such as an anti-blocking agent and an organic lubricant. Therefore, addition of the linear low-density polyethylene to the core layer does not affect slipperiness as much.

(Linear low-density polyethylene)

The polypropylene resin composition constituting the core layer contains linear low-density polyethylene, whereby the bending pinhole resistance can be enhanced. The linear low-density polyethylene can be, for example, produced by a production method such as a high-pressure method, a solution method, and a gas phase method. Examples of the linear low-density polyethylene include a copolymer of ethylene and at least one kind of $\alpha$-olefin in which the number of carbon atoms is not smaller than three. The $\alpha$-olefin may be an olefin generally called $\alpha$-olefin, and is preferably C3 to C12 $\alpha$-olefin such as propylene, butene-1, hexene-1, octene-1, and 4-methyl-1-pentene. Examples of the copolymer of ethylene and the $\alpha$-olefin include ethylene-hexene-1 copolymer, ethylene-butene-1 copolymer, and ethylene-octene-1 copolymer. From the viewpoint of bending pinhole resistance, an ethylene-hexene copolymer is preferable.

(Plant-derived linear low-density polyethylene)

The linear low-density polyethylene may contain plant-derived linear low-density polyethylene obtained by polymerizing ethylene derived from a plant such as sugar cane and an $\alpha$-olefin such as ethylene derived from fossil fuel such as petroleum or a plant.

Although the plant-derived linear low-density polyethylene has almost the same physical properties as fossil fuel-derived linear low-density polyethylene, the plant-derived linear low-density polyethylene has an effect of reducing generated carbon dioxide and can mitigate global warming from the viewpoint of carbon neutrality. The lower limit of a content of the plant-derived ethylene in the plant-derived linear low-density polyethylene is preferably 50% and more preferably 80%. In a case where the lower limit is not smaller than 50%, an effect of reducing carbon dioxide is preferably exhibited. The upper limit is preferably 98% and more preferably 96%. If the upper limit is larger than 98%, a proportion of an $\alpha$-olefin to be copolymerized is reduced and bending pinhole resistance is reduced.

The lower limit of the MFR (measured at 190°C and 2.18 kg) of the linear low-density polyethylene is preferably 1.0 g/10 min and more preferably 2.0 g/10 min. The upper limit is preferably 7.0 g/min and more preferably 5.0 g/min. In a case where the MFR is in the above-described range, compatibility with polypropylene resin is good, and sealing strength is made high.

The lower limit of the density of the linear low-density polyethylene is preferably 910 kg/m$^3$ and more preferably 913 kg/m$^3$. In a case where the lower limit is not smaller than 910 kg/m$^3$, blocking resistance is made good. The upper limit is 935 kg/m$^3$ and more preferably 930 kg/m$^3$. In a case where the upper limit is not smaller than and not larger than 930 kg/m$^3$, the bag breakage resistance is made good. Specifically, for example, an ethylene-hexene copolymer (plant-derived linear low-density polyethylene) SLH218 (the MFR is 2.3 g/min, the density is 916 kg/m$^3$, the melting point is 126°C) manufactured by Braskem, or an ethylene-hexene copolymer (fossil fuel-derived linear low-density polyethylene) FV405 (the MFR is 4.0 g/min, the density is 923 kg/m$^3$, the melting point is 118°C) manufactured by SUMITOMO CHEMICAL COMPANY, LIMITED, may be used.

A content of the linear low-density polyethylene in the polypropylene resin composition constituting the core layer is preferably not smaller than 3% by weight, more preferably not smaller than 8% by weight, even more preferably not smaller than 12% by weight, and particularly preferably not smaller than 15% by weight, from the viewpoint of bending pinhole resistance. The content of the linear low-density polyethylene is preferably not larger than 50% by weight, more preferably not larger than 40% by weight, even more preferably not larger than 30% by weight, and particularly preferably not larger than 25% by weight, from the viewpoint of heat resistance.

(Additive)

A polyolefin resin composition constituting the core layer of the present invention may contain an anti-blocking agent.

The anti-blocking agent to be added is, but is not particularly limited to, inorganic particles such as spherical silica, amorphous silica, zeolite, talc, mica, alumina, hydrotalcite, and aluminum borate, and organic particles such as polymethyl methacrylate and ultrahigh molecular weight polyethylene.

An amount of the anti-blocking agent contained in the polypropylene resin composition constituting the core layer is preferably not larger than 3000 ppm, more preferably not larger than 2500 ppm, even more preferably not larger than 1000 ppm, and particularly preferably not larger than 500 ppm, with respect to polyolefin resin in a layer to which the anti-blocking agent is added.

The polyolefin resin composition may contain an organic lubricant. Slipperiness and a blocking preventing effect of the multilayer film are enhanced, and handleability of the film is made good. This is because bleed-out of the organic lubricant occurs, and the organic lubricant is on the film surface, so that the lubricant effect and a mold releasing effect are considered to be exhibited.

The organic lubricant preferably has a melting point of not lower than an ordinary temperature. Examples of the organic lubricant include fatty acid amide and fatty acid ester.

Specific examples of the organic lubricant include oleic acid amide, erucic acid amide, behenic acid amide, ethylene bis oleic acid amide, hexamethylene bis oleic acid amide, and ethylene bis oleic acid amide. Although one of them may be used solely, two or more kinds thereof are preferably used in combination since slipperiness and a blocking preventing effect can be maintained also in a severe environment.

An amount of the organic lubricant in the polypropylene resin composition is preferably not larger than 1500 ppm and more preferably not larger than 1000 ppm, with respect to the polyolefin resin. In a case where the amount of the organic lubricant is not larger than 1500 ppm, blocking is unlikely to occur even in storage in a place such as a warehouse subjected to a high temperature in summer. The amount of the organic lubricant is preferably not smaller than 200 ppm and more preferably not smaller than 250 ppm. In a case where the amount of the organic lubricant is not smaller than 200 ppm, slipperiness can be made good.

The polyolefin resin composition constituting the core layer of the present invention can contain other additives such as an antioxidant, an antistatic agent, an antifogging agent, a neutralizer, a nucleating agent, and a coloring agent, an anorganic filler, and the like in an appropriate amount in any layer as necessary without departing from the object of the present invention.

As the antioxidant, a phenol-based antioxidant and a phosphite-based antioxidant may be used in combination, or an antioxidant having a phenol-based backbone and a phosphite-based backbone in one molecule may be used solely. Examples of the neutralizer include calcium stearate.

(Laminate layer)

(Propylene-$\alpha$-olefin random copolymer)

In the present invention, a polypropylene resin composition constituting a laminate layer contains a propylene-$\alpha$-olefin random copolymer from the viewpoint of heat-sealing strength.

Examples of the propylene-$\alpha$-olefin random copolymer include at least one kind of copolymer of propylene and an $\alpha$-olefin in which the number of carbon atoms is 2 or 4 to 20 and which is different from propylene. As the $\alpha$-olefin monomer in which the number of carbon atoms is 2 or 4 to 20, ethylene, butene-1, pentene-1, 4-methylpentene-1, hexene-1, octene-1, or the like can be used.

For the propylene-$\alpha$-olefin random copolymer, ethylene is preferably used as the $\alpha$-olefin in which the number of carbon atoms is 2 or 4 to 20 and which is different from propylene, from the viewpoint of heat-sealability. Furthermore, at least one kind of the propylene-$\alpha$-olefin random copolymer may be used, and two or more kinds of the propylene-$\alpha$-olefin random copolymers may be mixed and used as appropriate. A propylene-ethylene-butene random copolymer in which the main monomer is propylene and certain amounts of ethylene and butene are copolymerized, is particularly preferable. In the description herein, monomers are referred to and described in the order starting from a monomer having the largest monomer composition ratio in the monomers constituting the random copolymer.

The lower limit of a melt flow rate (MFR) of the propylene-$\alpha$-olefin random copolymer is preferably 0.6 g/10 min, more preferably 1.0g/10 min, and even more preferably 1.2 g/10 min. A melt flow rate of 0.6 g/10 min may degrade uniformity of the film thickness. The upper limit of the melt flow rate of the random copolymer is preferably 12.0 g/10 min, more preferably 9.0 g/10 min, and even more preferably 8.0 g/10 min.

Specific examples of the propylene-$\alpha$-olefin random copolymer include a propylene-ethylene random copolymer (Prime Polypro F-724NPC manufactured by Prime Polymer Co., Ltd., the MFR is 7.0 g/10 min at 230°C and a load of 2.16 kg, the melting point is 142°C), a propylene-ethylene-butene random copolymer (Sumitomo NOBLEN FL8115A manufactured by SUMITOMO CHEMICAL COMPANY, LIMITED, the MFR is 7.0 g/10 min at 230°C and a load of 2.16 kg, the melting point is 148°C), a propylene-ethylene-butene random copolymer (Prime Polypro F-794NV manufactured by Prime Polymer Co., Ltd., the MFR is 5.7 g/10 min at 230°C and a load of 2.16 kg, the melting point is 134°C), and a propylene-ethylene-butene random copolymer (Sumitomo NOBLEN FL6745A manufactured by SUMITOMO CHEMICAL COMPANY, LIMITED, the MFR is 6.0 g/10 min at 230°C and a load of 2.16 kg, the melting point is 130°C).

A content of the propylene-$\alpha$-olefin random copolymer in the polypropylene resin composition constituting the laminate layer is preferably not smaller than 25% by weight, more preferably not smaller than 40% by weight, even more preferably not smaller than 60% by weight, particularly preferably 75% by weight, and particularly preferably not smaller than 80% by weight, from the viewpoint of heat-sealing strength. The content of the propylene-$\alpha$-olefin random copolymer is preferably not larger than 90% by weight, more preferably not larger than 85% by weight, even more preferably not larger than 80% by weight, particularly preferably not larger than 75% by weight, and particularly preferably not larger than 70% by weight, from the viewpoint of bending pinhole resistance.

(Propylene homopolymer)

In the present invention, the polypropylene resin composition constituting the seal laminate layer contains propylene homopolymer, whereby heat resistance can be enhanced. The propylene homopolymer to be used is preferably isotactic polypropylene that has high crystallinity and can inhibit degradation of a heat shrinkage rate.

The melt flow rate (MFR) (measured at 230°C and a load of 2.16 kg) of the propylene homopolymer is, but is not particularly limited to, preferably not smaller than 1.0 g/10 min and not larger than 10.0 g/10 min, and more preferably not smaller than 2.0 g/min and not larger than 8.0 g/min. If the melt flow rate is smaller than 1 g/10 min, the viscosity is excessively high, and extrusion by a T-die is difficult. Meanwhile, if the melt flow rate is larger than 10 g/10 min, the film has poor stickiness and the film has low impact resistance strength (impact strength). Specifically, for example, a propylene homopolymer FLX80E4 (the MFR is 7.5 g/10 min, the melting point is 164°C) manufactured by SUMITOMO CHEMICAL COMPANY, LIMITED, can be used.

A content of the propylene homopolymer in the polypropylene resin composition constituting the laminate layer is preferably not smaller than 30% by weight, more preferably not smaller than 40% by weight, and particularly preferably not smaller than 50% by weight, from the viewpoint of heat resistance. The content of the propylene homopolymer is preferably not larger than 70% by weight, more preferably not larger than 65% by weight, even more preferably not larger than 30% by weight, and particularly preferably 0% by weight, from the viewpoint of heat-sealing strength and bending pinhole resistance.

(Linear low-density polyethylene)

The polypropylene resin composition constituting the laminate layer contains linear low-density polyethylene, whereby the bending pinhole resistance can be enhanced. In a case where the film surface layer also contains the linear low-density polyethylene, bending pinhole resistance is significantly enhanced as compared with a case where the linear low-density polyethylene is contained only in the core layer.

The linear low-density polyethylene can be, for example, produced by a production method such as a high-pressure method, a solution method, and a gas phase method. Examples of the linear low-density polyethylene include a copolymer of ethylene and at least one kind of $\alpha$-olefin in which the number of carbon atoms is not smaller than three. The $\alpha$-olefin may be an olefin generally called $\alpha$-olefin, and is preferably C3 to C12 $\alpha$-olefin such as propylene, butene-1, hexene-1, octene-1, and 4-methyl-1-pentene. Examples of the copolymer of ethylene and the $\alpha$-olefin include ethylene-hexene-1 copolymer, ethylene-butene-1 copolymer, and ethylene-octene-1 copolymer. From the viewpoint of bending pinhole resistance, an ethylene-hexene copolymer is preferable.

(Plant-derived linear low-density polyethylene)

The linear low-density polyethylene may contain plant-derived linear low-density polyethylene obtained by polymerizing ethylene derived from a plant such as sugar cane and an $\alpha$-olefin such as ethylene derived from fossil fuel such as petroleum or a plant.

Although the plant-derived linear low-density polyethylene has almost the same physical properties as fossil fuel-derived linear low-density polyethylene, the plant-derived linear low-density polyethylene has an effect of reducing generated carbon dioxide and can mitigate global warming from the viewpoint of carbon neutrality. The lower limit of a content of the plant-derived ethylene in the plant-derived linear low-density polyethylene is preferably 50% and more preferably 80%. In a case where the lower limit is not smaller than 50%, an effect of reducing carbon dioxide is preferably exhibited. The upper limit is preferably 98% and more preferably 96%. If the upper limit is larger than 98%, a proportion of an $\alpha$-olefin to be copolymerized is reduced and bending pinhole resistance is reduced.

The lower limit of the MFR (measured at 190°C and 2.18 kg) of the linear low-density polyethylene is preferably 1.0 g/10 min and more preferably 2.0 g/10 min. The upper limit is preferably 7.0 g/min and more preferably 5.0. In a case where the MFR is in the above-described range, compatibility with polypropylene resin is good, and sealing strength is made high.

The lower limit of the density of the linear low-density polyethylene is preferably 910 kg/m$^3$ and more preferably 913 kg/m$^3$. In a case where the lower limit is not smaller than 910 kg/m$^3$, blocking resistance is made good. The upper limit is 935 kg/m$^3$ and more preferably 930 kg/m$^3$. In a case where the upper limit is not smaller than 930 kg/m$^3$, bag breakage resistance is made good. Specifically, for example, an ethylene-hexene copolymer (plant-derived linear low-density polyethylene) SLH218 (the MFR is 2.3 g/min, the density is 916 kg/m$^3$, the melting point is 126°C) manufactured by Braskem, or an ethylene-hexene copolymer (fossil fuel-derived linear low-density polyethylene) FV405 (the MFR is 4.0 g/min, the density is 923 kg/m$^3$, the melting point is 118°C) manufactured by SUMITOMO CHEMICAL COMPANY, LIMITED, may be used.

A content of the linear low-density polyethylene in the polypropylene resin composition constituting the laminate layer is preferably not smaller than 3% by weight, more preferably not smaller than 8% by weight, even more preferably not smaller than 15% by weight, particularly preferably not smaller than 20% by weight, and most preferably not smaller than 25% by weight, from the viewpoint of bending pinhole resistance. The content of the linear low-density polyethylene is preferably not larger than 50% by weight, more preferably not larger than 40% by weight, and even more preferably not larger than 30% by weight, from the viewpoint of heat resistance and heat-sealing strength.

Slipperiness substantially depends on an added amount of an additive such as an anti-blocking agent and an organic lubricant. Therefore, addition of the linear low-density polyethylene to the laminate layer does not affect slipperiness as much.

(Additive)

A polyolefin resin composition constituting the laminate layer of the present invention may contain an anti-blocking agent. One kind of anti-blocking agent may be contained. However, in a case where two or more kinds of inorganic particles having different particle diameters and shapes are blended, protrusions can be complicated also on the unevenness on the film surface, and a blocking preventing effect can be further enhanced.

The anti-blocking agent to be added is, but is not particularly limited to, inorganic particles such as spherical silica, amorphous silica, zeolite, talc, mica, alumina, hydrotalcite, and aluminum borate, and organic particles such as polymethyl methacrylate and ultrahigh molecular weight polyethylene.

An amount of the anti-blocking agent contained in the polypropylene resin composition constituting the laminate layer is preferably not larger than 3000 ppm, more preferably not larger than 2500 ppm, even more preferably not larger than 1000 ppm, particularly preferably not larger than 500 ppm, and most preferably not larger than 200 ppm, with respect to polyolefin resin in a layer to which the anti-blocking agent is added. In a case where the amount of the anti-blocking agent is not larger than 3000 ppm, dropping of the anti-blocking agent on the laminate layer surface can be reduced.

The polyolefin resin composition may contain an organic lubricant. Slipperiness and a blocking preventing effect of the multilayer film are enhanced, and handleability of the film is made good. This is because bleed-out of the organic lubricant occurs, and the organic lubricant is on the film surface, so that the lubricant effect and a mold releasing effect are considered to be exhibited.

The organic lubricant preferably has a melting point of not lower than an ordinary temperature. Examples of the organic lubricant include fatty acid amide and fatty acid ester.

Specific examples of the organic lubricant include oleic acid amide, erucic acid amide, behenic acid amide, ethylene bis oleic acid amide, hexamethylene bis oleic acid amide, and ethylene bis oleic acid amide. Although one of them may be used solely, two or more kinds thereof are preferably used in combination since slipperiness and a blocking preventing effect can be maintained also in a severe environment.

An amount of the organic lubricant in the polypropylene resin composition is preferably not larger than 1500 ppm, more preferably not larger than 1000 ppm, particularly preferably not larger than 500 ppm, and particularly preferably not larger than 200pp, with respect to the polyolefin resin. In a case where the amount of the organic lubricant is not larger than 1500 ppm, blocking is unlikely to occur even in storage in a place such as a warehouse subjected to a high temperature in summer.

The polyolefin resin composition constituting the laminate layer of the present invention may contain other additives such as an antioxidant, an antistatic agent, an antifogging agent, a neutralizer, a nucleating agent, and a coloring agent, an anorganic filler, and the like in an appropriate amount in any layer as necessary without departing from the object of the present invention.

As the antioxidant, a phenol-based antioxidant and a phosphite-based antioxidant may be used in combination, or an antioxidant having a phenol-based backbone and a phosphite-based backbone in one molecule may be used solely. Examples of the neutralizer include calcium stearate.

(Polyolefin resin film)

The polyolefin resin film of the present invention has a multilayer structure, and has the sealing layer, the core layer, and the laminate layer in order, respectively.

The sealing layer and the laminate layer are layers disposed on the surface sides of the film, and the core layer is disposed between the sealing layer and the laminate layer.

The laminate layer is a layer appropriate for adhering a base film such as a biaxially oriented polyamide film, and is preferably stacked with the base film through an adhesive resin in practice.

The sealing layer is a layer appropriate for stacking and heat-sealing two multilayer bodies so as to dispose the polyolefin resin films of the obtained multilayer bodies on the inner side, and producing a packaging body.

In the polyolefin resin film of the present invention, a difference of a content between the linear low-density polyethylene in the polypropylene resin composition constituting the sealing layer and the linear low-density polyethylene in the polypropylene resin composition constituting the core layer is preferably not smaller than 1% by weight and not larger than 18% by weight. A difference of a concentration between the linear low-density polyethylene of the sealing layer and the linear low-density polyethylene of the core layer is more preferably not larger than 15 parts by weight, even more preferably not larger than 10% by weight, and particularly preferably not larger than 8% by weight. In a case where the difference of the content is not larger than 18% by weight, strength between the layers at an interface between the sealing layer and the core layer can be maintained high, and heat-sealing strength can be made high.

In the polyolefin resin film of the present invention, a difference of a content between the linear low-density polyethylene in the polypropylene resin composition constituting the core layer and the linear low-density polyethylene in the polypropylene resin composition constituting the laminate layer is preferably not smaller than 1% by weight and not larger than 18% by weight. A difference of a concentration between the linear low-density polyethylene of the sealing layer and the linear low-density polyethylene of the core layer is more preferably not larger than 15 parts by weight, even more preferably not larger than 10% by weight, and particularly preferably not larger than 8% by weight. In a case where the difference of the content is not larger than 18% by weight, strength between the layers at an interface between the sealing layer and the core layer can be maintained high and heat-sealing strength can be made high.

In the polyolefin resin film of the present invention, the content of the linear low-density polyethylene in the polypropylene resin composition constituting the core layer is preferably larger than the content of the linear low-density polyethylene in the polypropylene resin composition constituting the sealing layer, and the content of the linear low-density polyethylene in the polypropylene resin composition constituting the laminate layer is preferably larger than the content of the linear low-density polyethylene in the polypropylene resin composition constituting the core layer. Thus, the linear low-density polyethylene in the film is likely to be uniformly dispersed, and bending pinhole resistance is advantageously good. Furthermore, since a proportion of polypropylene resin in resin near the heat-sealing surface is large, heat-sealing strength can be made high.

Furthermore, in a case where the propylene-$\alpha$-olefin random copolymer having a low melting point is used for the sealing layer, and the propylene-$\alpha$-olefin random copolymer having a high melting point is used for the layer and the laminate layer, heat resistance and bending pinhole resistance can be further enhanced while more preferable heat-sealing strength is made high.

The surface of the laminate layer in the polyolefin resin film of the present invention is preferably activated by corona treatment or the like. Thus, the laminating strength with respect to the base film is enhanced.

The lower limit of the thickness of the polyolefin resin film of the present invention is preferably 15 $\mu$m, more preferably 20 $\mu$m, and even more preferably 25 $\mu$m. In a case where the lower limit is not smaller than 15 $\mu$m, heat-sealing strength and bag breakage resistance are likely to be achieved.

The upper limit of the film thickness is preferably 80 $\mu$m, more preferably 70 $\mu$m, even more preferably 65 $\mu$m, still more preferably 60 $\mu$m, and particularly preferably 50 $\mu$m. In a case where the upper limit is not larger than 80 $\mu$m, the film does not have excessively high stiffness and is easily processed, and, furthermore, a preferable packaging body is likely to be produced.


(Method for producing the polyolefin resin film)

As a method for molding the polyolefin resin film of the present invention, for example, an inflation method or a T-die method can be used. In order to enhance transparency, a T-die method is preferable. In the inflation method, a cooling medium is air. Meanwhile, the T-die method is a production method advantageous for increasing a cooling rate since a cooling roll is used. Transparency is advantageously good since crystallization of an unstretched sheet can be inhibited by increasing a cooling rate. For such a reason, a non-oriented sheet according to the T-die method is preferable.

Materials of each of the polypropylene resin compositions for the sealing layer, the core layer, and the laminate layer are mixed, and then melted, mixed, and extruded by different extruders, respectively, and the multilayer sheet of the sealing layer, the core layer, and the laminate layer which have been melted is cast onto a cooling roll from the T-die, thereby obtaining a non-oriented sheet. The lower limit of the temperature of the cooling roll is preferably 15°C and more preferably 20°C. If the lower limit is lower than the above-described temperature, moisture condensation is caused on the cooling roll, and adhesion may become insufficient. The upper limit of the cooling roll is preferably 60°C and more preferably 50°C. If the upper limit is higher than the above-described temperature, transparency may deteriorate.

Pellets that are obtained by recycling a semi-manufactured product generated in a manufacturing process or a product film having been manufactured are added to the core layer, whereby resin can be reused without degrading heat-sealing strength, bending pinhole resistance, and bag breakage resistance.

(Characteristics of the polyolefin resin film)

(Haze)

The lower limit of the haze of the polyolefin resin film of the present invention is preferably 1.0%, more preferably 2.0%, even more preferably 2.5%, and particularly preferably 3.0%. In a case where the lower limit is not smaller than 1.0%, blocking at the inner surfaces in the packaging body is unlikely to occur since the unevenness of the film surface is not extremely small.

The upper limit of the haze is preferably 20.0%, more preferably 15.0%, even more preferably 10.0%, still more preferably not larger than 8%, and particularly preferably 6%. In a case where the upper limit is not larger than 20.0%, the packaging body is likely to have visibility. Although the linear low-density polyethylene has high crystallinity and is likely to increase the haze, the increase of the haze can be inhibited when addition is within the above-described preferable range.

(Coefficient of static friction)

The upper limit of the coefficient of static friction of the polyolefin resin film of the present invention is preferably 0.70, more preferably 0.50, and even more preferably 0.40. In a case where the upper limit is not larger than 0.70, slidability between the surfaces is good and the openability is good when the packaging body is filled with foods or unsealed.

The lower limit of the coefficient of static friction of a single unit is preferably 0.10, more preferably 0.15, even more preferably 0.20, still more preferably 0.25, and particularly preferably 0.30. In a case where the lower limit is not smaller than 0.10, a rolled film is unlikely to collapse when transported.

**(Young's modulus)**

The lower limit **of the Young's modulus** (longitudinal direction) of the polyolefin resin film of the present invention is preferably 200 MPa, more preferably 300 MPa, even more preferably 400 MPa, still more preferably 500 MPa, and particularly preferably 600 MPa. If the lower limit is smaller than 200 MPa, stiffness is excessively low, and processability may be poor. **The upper limit of the Young's modulus** (longitudinal direction) is preferably 1000 MPa, more preferably 800 MPa, and even more preferably 750 MPa. The film **having a Young's** modulus larger than 1000 MPa is brittle, and bag breakage resistance may be thus reduced.

The lower limit **of the Young's modulus** (width direction) of the polyolefin resin film of the present invention is preferably 200 MPa, more preferably 300 MPa, even more preferably 400 MPa, still more preferably 500 MPa, and particularly preferably 600 MPa. 200 MPa. If the lower limit is smaller than the above-described value, stiffness is excessively low and processability may be poor. The upper limit **of the Young's modulus** (width direction) is preferably 1000 MPa, more preferably 800 MPa, and even more preferably 750 MPa. A film **having a Young's modulus larger than** 1000 MPa is brittle, and bag breakage resistance may be thus reduced. **The Young's** modulus is increased by adding a small amount of linear low-density polyethylene to the polypropylene resin film.

(Impact strength)

The lower limit of impact strength of the polyolefin resin film of the present invention is preferably 0.20J, more preferably 0.25J, even more preferably 0.30J, and still more preferably 0.55J. In a case where the lower limit is not smaller than 0.20J, bag breakage resistance at the time of falling of the packaging body can be enhanced. 1.0J is sufficient the impact strength. Impact strength substantially depends on the thickness and molecular orientation of the film. Impact strength and bag breakage resistance at the time of falling do not necessarily correlate with each other.

(Accelerated blocking strength)

The lower limit of accelerated blocking strength of the polyolefin resin film of the present invention is preferably 20 mN/70 mm, more preferably 30 mN/70 mm, and even more preferably 36 mN/70 mm. In a case where the lower limit is not smaller than 20 mN/70 mm, the film is likely to have stiffness. The upper limit of the accelerated blocking strength is preferably 100 mN/70 mm, more preferably 80 mN/70 mm, even more preferably 70 mN/70 mm, and particularly preferably 60 mN/70 mm. In a case where the upper limit is not larger than 100 mN/70 mm, blocking is unlikely to occur on the inner surface of the packaging body. Addition of linear low-density polyethylene to the core layer and the laminate layer inhibits degradation of the accelerated blocking strength.

(Piercing strength)

The lower limit of piercing strength of the polyolefin resin film of the present invention as a single unit is preferably 1.0 N, more preferably 1.2 N, even more preferably 1.5 N, and still more preferably 1.7 N. In a case where the lower limit is not smaller than 1.0 $\mu$m, the multilayer body has good piercing pinhole resistance. The piercing strength of 5.0 N/$\mu$m is extremely excellent, while 3.0 **N/$\mu$m is sufficient. The piercing strength substantially depends** on orientation in the film, and the piercing strength does not change as much by merely changing resin.

(Plane orientation coefficient of film)

The lower limit of a plane orientation coefficient of the film is preferably 0.000 and more preferably 0.001. Production of a film having a plane orientation coefficient smaller than the above-described lower limit is difficult. The upper limit of the plane orientation of the film is 0.010, more preferably 0.008, and even more preferably not larger than 0.006. If the coefficient is not smaller than the above-described value, the film is non-uniformly stretched, and the uniformity of the thickness may deteriorate.

(Heat-sealing start temperature)

The lower limit of a heat-sealing start temperature of the polyolefin resin film of the present invention is preferably 110°C and more preferably 120°C. In a case where the lower limit is not lower than 1 10°C, stiffness is high and handling is facilitated. The upper limit of the heat-sealing start temperature is 150°C, more preferably 10°C, and even more preferably 130°C. In a case where the upper limit is not higher than 150°C, the packaging body can be produced at a high speed, and this is economically advantageous. The heat-sealing start temperature is greatly influenced by the melting point of the sealing layer. Therefore, the linear low-density polyethylene for the core layer and the laminate layer can inhibit change of the heat-sealing temperature.

(Wetting tension)

In the polyolefin resin film of the present invention, the lower limit of wetting tension at a surface that is laminated with at least one film selected from the group consisting of a polyamide resin film, a polyester resin film, and a polypropylene resin film is preferably 30 mN/m and more preferably 35 mN/m. In a case where the lower limit is not smaller than 30 mN/m, laminating strength is unlikely to be reduced. The upper limit of the wetting tension is preferably 55 mN/m and more preferably 50 mN/m. In a case where the upper limit is not larger than 55 mN/m, blocking between the films is unlikely to occur when the polyolefin resin film is wound into a roll.

(Structure of the multilayer body and method for producing the multilayer body)

A multilayer body of the present invention in which the polyolefin resin film is used is a multilayer body of the polyolefin resin film used as a sealant, and at least one film selected from the group consisting of a polyamide resin film, a polyester resin film, and a polypropylene resin film. Furthermore, the multilayer body may have such a structure that, for example, coating or vapor deposition is performed on the base film or aluminium foil is further stacked with the base film as in a known technique, in order to impart adhesiveness and barrier properties.

Specifically, examples of the multilayer body include biaxially stretched (polyethylene terephthalate) PET film/aluminium foil/sealant, biaxially stretched (polyethylene terephthalate) PET film/biaxially stretched nylon film/sealant, biaxially stretched nylon film/sealant, biaxially stretched polypropylene film/sealant, and biaxially stretched (polyethylene terephthalate) PET film/biaxially stretched nylon film/aluminium foil/sealant.

The biaxially stretched nylon film has higher strength than the other base films, and enhances sealing strength of the multilayer body.

As the biaxially stretched nylon film to be used, a biaxially stretched film formed of nylon 6 or nylon 66 is preferable, and the thickness is preferably in a range of 15 to 30 $\mu$m.

By using the polyolefin resin film of the present invention as a sealant, the multilayer body can have enhanced heat-sealability, bag breakage resistance, and bending pinhole resistance.

As a lamination method, a known method such as a dry lamination method and an extrusion lamination method can be used, and any of the lamination methods can be used.

The characteristics of the multilayer body will be described.

(Bending pinhole resistance)

Bending resistance can be measured according to Gelvo pinhole evaluation. In the present invention, the upper limit of the number of pinholes of the multilayer body after bending the multilayer body 1000 times at 1°C is preferably 35, more preferably 30, even more preferably 25, and particularly preferably 20. In a case where the upper limit is not larger than 35, pinholes are unlikely to be generated due to bending impact when the packaging body is transported.
In a case where the number of pinholes of a multilayer body is about 10, the multilayer body is very excellent.

(Piercing strength)

The lower limit of piercing strength of the multilayer body of the present invention is preferably 10 N, more preferably 12 N, and even more preferably 14 N. In a case where the lower limit is not smaller than 10 N, pinholes are unlikely to be generated when a protrusion comes into contact with the packaging body. The upper limit of piercing strength is preferably 45 N, more preferably 30 N, and even more preferably 25 N. In a case where the upper limit is not larger than 45 N, the multilayer body does not have excessively high stiffness and handling is facilitated. The piercing strength substantially depends on orientation of the film, and the piercing strength does not change as much by merely changing resin.

(Heat-sealing strength)

The lower limit of heat-sealing strength of the multilayer body of the present invention is preferably 20 N/15 mm, more preferably 25 N/15 mm, and even more preferably 30 N/15 mm. In a case where the lower limit is not smaller than 20 N/15 mm, bag breakage resistance is likely to be achieved. The heat-sealing strength of 60 N/15 mm is very excellent, while 35 N/15 mm is sufficient.

(Packaging body)

The multilayer body disposed so as to wrap portions around contents for protecting the contents such as foods from dust and gas in nature is called a packaging body. The packaging body is produced by, for example, cutting out the multilayer bodies, and adhering inner surfaces to each other with, for example, a heated heat-sealing bar or ultrasonically to form a bag-like shape. For example, a four-side sealed bag produced by stacking two rectangular multilayer bodies such that the sealant sides are on the inner side, and heat-sealing the four sides, is widely used. The contents may be foods and may also be other products such as daily sundries. The shape of the packaging body may be other than a rectangular shape, for example, a standing pouch or a pillow-shaped packaging body.
Characteristics of the packaging body will be described.

(Bag breakage resistance at the time of falling)

The lower limit of bag breakage resistance at the time of falling of the packaging body formed of the multilayer body according to the present invention is preferably not smaller than 12 times, more preferably not smaller than 15 times, even more preferably not smaller than 20 times, still more preferably not smaller than 22 times, and particularly preferably not smaller than 24 times. In a case where the lower limit is not smaller than 12 times, the packaging body containing foods is unlikely to be broken even if the packaging body is erroneously dropped. About 30 times is sufficient as the bag breakage resistance at the time of falling.
The bag breakage resistance at the time of falling of the packaging body is influenced by bending pinhole resistance, piercing strength, and heat-sealing strength of the multilayer body, and, thus, these characteristics are preferably in the preferable ranges.

EXAMPLES

The present invention will be described below in detail by means of examples. However, the present invention is not limited to the examples. Characteristics obtained in each example were measured and evaluated by the following methods. In the evaluation, a flow direction of a film is referred to as longitudinal direction, and the direction perpendicular to the flow direction is referred to as width direction in a film production step.

(1) Resin density

The density was evaluated in accordance with the D method (density gradient tube) in JIS K7112:1999.

The measurement was performed with N=3 and the average value was calculated.

(2) Melt flow rate (MFR)

The melt flow rates of the propylene-$\alpha$-olefin random copolymer and propylene homopolymer were measured at 230°C and a load of 2.16 kg, and the melt flow rate of the linear low-density polyethylene was measured at 190°C and a load of 2.16 kg, in accordance with JIS K-7210-1. The measurement was performed with N=3, and the average value was calculated.

(3) Melting point

A DSC curve of resin was obtained by using Shimadzu differential scanning calorimeter DSC-60 manufactured by SHIMADZU CORPORATION, and a temperature at the maximum melting peak in the DSC curve was set as the melting point. The start temperature was 30°C, the temperature increase rate was 5°C/min, and the end temperature was 180°C. The measurement was performed with N=3, and the average value was calculated.

(4) Haze

The haze was measured in accordance with JIS K7136. The polyolefin resin film was measured with N=3 before lamination. The average value was calculated.

(5) Coefficient of static friction

The sealing layer side portions of the films were stacked with each other, and the coefficient of static friction was measured by using a universal tensile tester STM-T-50BP (manufactured by **Toyo Baldwin Co., Ltd)** in accordance with JIS K7125. Samples were cut out in the following three methods so as to have a dimension of 200 mm in the longitudinal direction and a dimension of 80 mm in the width direction, and measured.

(6) **Young's modulus**

A tensile strength in each of the longitudinal direction and the width direction was measured at 23°C in accordance with JIS-K7127. **At this time, the Young's** modulus (tensile initial elastic modulus) was calculated. The measurement was performed with N=3, and the average value was calculated.

(7) Plane orientation coefficient

The density was evaluated in accordance with JIS K0062:1999, Test methods for refractive index of chemical products. The measurement was performed with N=3, and the average value was calculated. The plane orientation coefficient was calculated according to Formula 1.

$$\text{Plane orientation coefficient} = (Nx+Ny)/2 - Nz \quad \text{(Formula 1)}$$

Nx: refractive index in the longitudinal direction, Ny: refractive index in the width direction, Nz: refractive index in the thickness direction

(8) Wetting tension

The wetting tension of the laminate layer surface was measured in accordance with JIS-K6768 Plastics-Film and sheeting-Determination of wetting tension.

(9) Impact resistance (J)

The impact resistance was measured at 23 °C by using a film impact tester manufactured by Toyo Seiki Seisaku-sho, Ltd.

(10) Accelerated blocking strength

The polyolefin resin film was cut out so as to have a dimension of 148 mm in the longitudinal direction and a dimension of 105 mm in the width direction. The seal surfaces were disposed so as to oppose each other and stacked. Preheating was performed in an environment of 50°C for 30 minutes, and the polyolefin resin films were thereafter held between 7.0 cm square aluminium plates maintained at 50°C. By using the Mini Test Press MP-SCH manufactured by Toyo Seiki Seisaku-sho, Ltd., the aluminium plates and the samples were pressed in conditions of 50°C and 100 kN, and maintained for 15 minutes. The samples were taken out and cut so as to have a dimension of 70 mm in the width direction. The stacked samples were opened over 30 mm, and a metal bar having a diameter of 3 mm was inserted so as to be parallel with the width direction. The samples were attached to Autograph AG-I manufactured by SHIMADZU CORPORATION, and the weight was measured when the metal bar was moved in the condition of 200 mm/min in the longitudinal direction. The measurement was performed with N=3, and the average value was calculated.

(11) Piercing strength

For the polyolefin resin film and the multilayer body, the piercing strength was measured at 23°C **in accordance with "2. Testing methods for strength, etc." in "Standards for** Food, Additives, etc. Chapter III: Apparatus and Containers and Packaging" (Notification No. 20 of the Ministry of Health and Welfare, 1982) in the Food Sanitation Act. The film was pierced with a needle having a tip diameter of 0.7 mm at a piercing speed of 50 mm/min, and the strength was measured when the needle pierced through the film. The measurement was performed with N=3, and the average value was calculated.

(12) Heat-sealing start temperature

For the polyolefin resin film, the heat-sealing start temperature was measured in accordance with JIS Z 1713(2009). At this time, the film was cut into a test piece (for heat-sealing) having a 50 mm×250 mm (film width direction×film length direction) rectangular shape. The sealing layer portions of the two test pieces were stacked with each other, a heat gradient tester (heat seal tester) manufactured by Toyo Seiki Seisaku-sho, Ltd. was used, and the heat-sealing pressure was set as 0.2 MPa and the heat-sealing time was set as 1.0 sec. The heat-sealing was performed in a condition in which the temperature was incremented at a gradient of 5°C. After the heat-sealing, the test pieces were cut out so as to have a width of 15 mm. The test pieces fused by the heat-sealing were opened by 180°, an unsealed portion was held by a chuck, and the sealed portions were peeled off. A temperature at a time point when the heat-sealing strength reached 4.9 N was obtained. A universal material tester 5965 manufactured by Instron Instruments was used as a tester. The testing speed was 200 mm/min. The measurement was performed with N=5, and the average value was calculated.

(13) Bending pinhole resistance

The multilayer body having the polyolefin resin film stacked therein was cut out so as to have a dimension of 280 mm in the longitudinal direction and a dimension of 260 mm in the width direction. The multilayer body was **formed into a cylindrical shape having** φ89 mm and a height of 260 mm such that the polyolefin resin film was on the inner side, and fixed with cellophane tape. The sample was attached to a thermostat bath-equipped Gelvo Flex tester manufactured by TESTER SANGYO CO, LTD., and a bending load was applied 1000 times at 1°C. The sample was detached, and the number of pinholes was measured. The measurement was performed with N=3, and the average value was calculated.

(14) Heat-sealing strength

The heat-sealing condition and the strength measuring condition were as described below. That is, the polyolefin resin film side portions of the multilayer bodies obtained in each of examples and comparative examples were stacked with each other, and heat-sealed at a pressure of 0.2 MPa and a heat-sealing temperature of 160°C for one second by using a seal bar having a width of 10 mm, and thereafter cooled. A test piece having a dimension of 80 mm in the longitudinal direction and a dimension of 15 mm in the width direction was cut out from the films having been heat-sealed at each temperature, and peel strength was measured for each test piece when the heat-sealed portions were peeled off at a crosshead speed of 200 mm/min. A universal material tester 5965 manufactured by Instron Instruments was used as a tester. The measurement was performed with N=3 in each example, and the average value was calculated.

(15) Bag breakage resistance at the time of falling

The multilayer body was cut out, and a four-side sealed bag having a longitudinal dimension of 170 mm and a lateral dimension of 120 mm as the internal dimensions was produced such that 200 ml of saturated saline was enclosed. At this time, the heat-sealing was performed for one second under conditions in which the pressure was 0.2 MPa, the heat-sealing temperature was 160°C, and the width of a seal bar was 10 mm. After the process of producing the bag, the end portions of the four-side sealed bag was cut such that the seal width was 5 mm. Subsequently, the obtained product was left as it was, in an environment of +5°C, for eight hours. In this environment, the four-side sealed bag was dropped from a position having a height of 1.2 m, onto a flat concrete floor, in a state where the surface was level. The bag was repeatedly dropped until the bag was broken, and the number of times of the repeated dropping was measured. Twenty samples were repeatedly tested, and the average value was calculated.

(Example 1)

(Polyolefin resin film)

For the polypropylene resin film of Example 1, materials were adjusted according to the resin compositions and the proportions thereof for each layer as indicated below in Table 1 and Table 2. To the sealing layer, 360 ppm of behenic acid amide as an organic lubricant, and 2000 ppm of silica, as an inorganic anti-blocking agent, having an average particle diameter of 4 $\mu$m were added as masterbatch with the adjusted products in the layers indicated in Table 1 and Table 2 being 100 parts by weight. To the core layer, 2700 ppm of behenic acid amide as an organic lubricant was added as masterbatch.

(Materials used for the sealing layer)

PP-1: propylene-ethylene-butene random copolymer FL6745A (MFR of 6.0 g/10 min, a melting point of 130°C) manufactured by SUMITOMO CHEMICAL COMPANY, LIMITED
LL-1: ethylene-hexene copolymer (plant-derived linear low-density polyethylene) SLH218 (MFR of 2.3 g/min, a density of 916 kg/m³, a melting point of 126°C) manufactured by Braskem
Silica particles: amorphous silica KMP130-4 (average particle diameter of 4 $\mu$m) manufactured by **Shin-Etsu Chemical Co., Ltd.**
Organic lubricant: behenic acid amide BNT-22H manufactured by NIPPON FINE CHEMICAL CO., LTD.

(Materials used for the core layer)

PP-2: propylene-ethylene-butene random copolymer FL8115A (MFR of 7.0 g/10 min, a melting point of 148°C) manufactured by SUMITOMO CHEMICAL COMPANY, LIMITED
PP-3: propylene homopolymer FLX80E4 (MFR of 7.5 g/10 min, a melting point of 164°C) manufactured by SUMITOMO CHEMICAL COMPANY, LIMITED
LL-1: ethylene-hexene copolymer (plant-derived linear low-density polyethylene) SLH218 (MFR of 2.3 g/min, a density of 916 kg/m³, a melting point of 126°C) manufactured by Braskem
LL-2: ethylene-hexene copolymer (fossil fuel-derived linear low-density polyethylene) FV405 (MFR of 4.0 g/min, a density of 923 kg/m³, a melting point of 118°C) manufactured by SUMITOMO CHEMICAL COMPANY, LIMITED
LDPE-1: ethylene-hexene copolymer (plant-derived low density polyethylene) SLH818 (MFR of 8.1 g/min, a density of 918 kg/m³) manufactured by Braskem
Organic lubricant: behenic acid amide BNT-22H manufactured by NIPPON FINE CHEMICAL CO., LTD.

(Materials used for the laminate layer)

PP-2: propylene-ethylene-butene random copolymer FL8115A (MFR of 7.0 g/10 min, a melting point of 148°C) manufactured by SUMITOMO CHEMICAL COMPANY, LIMITED
PP-3: propylene homopolymer FLX80E4 (MFR of 7.5 g/10 min, a melting point of 164°C) manufactured by SUMITOMO CHEMICAL COMPANY, LIMITED
LL-1: ethylene-hexene copolymer (plant-derived linear low-density polyethylene) SLH218 (MFR of 2.3 g/min, a density of 916 kg/m$^3$, a melting point of 126°C) manufactured by Braskem
LL-2: ethylene-hexene copolymer (fossil fuel-derived linear low-density polyethylene) FV405 (MFR of 4.0 g/min, a density of 923 kg/m$^3$, a melting point of 118°C) manufactured by SUMITOMO CHEMICAL COMPANY, LIMITED
LDPE-1: ethylene-hexene copolymer (plant-derived low density polyethylene) SLH818 (MFR of 8.1 g/min, a density of 918 kg/m$^3$) manufactured by Braskem
These materials were mixed so as to be uniform at the proportions indicated in Table 1 and Table 2, and the mixed materials for producing the polyolefin resin film were obtained.

(Melt-extrusion)

The mixed material used for the intermediate layer was introduced by a three-stage-type single-screw extruder having a screw diameter of 90 mm, and the mixed material for the heat-sealing layer and the mixed material for the laminate layer were introduced by using a three-stage-type single screw extruder having a diameter of 65 mm and a three-stage-type single screw extruder having a diameter of 45 mm, respectively, such that the order was an order of the heat-sealing layer/the intermediate layer/the laminate layer. The obtained product was introduced into a T-slot type die designed such that the flow in the die was uniform by setting a preland in two stages with a width of 800 mm, and curving the shape of the stepped portion so as to form uniform flow of the melted resin, and extruded at a die outlet temperature of 230°C. The thickness proportions of the laminate layer/the intermediate layer/the heat sealing layer were 25%/50%/25%, respectively.

(Cooling)

The melted resin sheet discharged from the die was cooled by a cooling roll set at 35°C, and an unstretched polyolefin resin film having a thickness of 30 μm was obtained. When the melted resin sheet was cooled by the cooling roll, both ends of the film on the cooling roll were fixed by an air nozzle, the entire width of the melted resin sheet was pressed against the cooling roll by air knife, and a vacuum chamber was simultaneously caused to act, whereby air was prevented from being entrained into between the melted resin sheet and the cooling roll. Both ends of the air nozzle were disposed in series with the film traveling direction. A portion around the die was surrounded by a sheet to prevent wind from hitting on the melted resin sheet. A direction of the suction port of the vacuum chamber was aligned with a traveling direction of the extruded sheet. Furthermore, the portion around the die was surrounded by a sheet to prevent wind from hitting on the melted resin sheet.

(Corona treatment)

The surface of the laminate layer of the film was subjected to corona treatment (power density of 20 W·min/m$^2$).

(Winding)

The film production speed was set as 20 m/min. The ear portion of the produced film was trimmed and the film was wound into a roll.

(Production of the multilayer body)

The polyolefin resin film obtained in each of the examples and the comparative examples and a biaxially stretched nylon film (N1102 manufactured by TOYOBO CO., LTD., thickness of 15 μm) as a base film were dry-laminated by applying, to the base film, an ester-based adhesive obtained by mixing 33.6 parts by mass of a main agent (TM569 manufactured by Toyo-Morton, Ltd.), 4.0 parts by mass of a curing agent (CAT10L manufactured by Toyo-Morton, Ltd.), and 62.4 parts by mass of ethyl acetate such that an application amount of the ester-based adhesive was 3.0g/m$^2$. The obtained product was wound and maintained at 40°C, and was subjected to aging for three days, to obtain the multilayer body.

(Example 2)

The polyolefin resin film was obtained in the same method as in Example 1 except that the materials indicated in Table 1 and Table 2 were used, and an unstretched polyolefin resin film had a thickness of 60 μm. In the same manner as in Example 1, the multilayer body was obtained.

(Examples 3-7)

The polyolefin resin film was obtained in the same method as in Example 1 except that the materials indicated in Table 1 and Table 2 were used, and an unstretched polyolefin resin film had a thickness of 30 $\mu$m. In the same manner as in Example 1, the multilayer body was obtained.

(Comparative Examples 1-4, Comparative Examples 6-7)

The polyolefin resin film was obtained in the same method as in Example 1 except that the materials indicated in Table 1 and Table 2 were used, and an unstretched polyolefin resin film had a thickness of 30 $\mu$m. In the same manner as in Example 1, the multilayer body was obtained.

(Comparative example 5)

A 30 $\mu$ polyolefin resin film having a single layer was obtained in the same manner as in Example 1 by using the materials indicated in Table 1 and Table 2 and the extruder only for the core layer. In the same manner as in Example 1, the multilayer body was obtained.

In Comparative example 1, since the linear low-density polyethylene was not added to the core layer and the laminate layer, bag breakage resistance at the time of falling and bending pinhole resistance were poor.

In Comparative example 2 and Comparative example 3, since a difference of a content between the linear low-density polyethylene of the sealing layer and the linear low-density polyethylene of the core layer was large, heat-sealing strength was poor.

In Comparative example 4, since a content of the linear low-density polyethylene in the sealing layer was large, heat-sealing strength was poor.

In Comparative example 5, since a content of the linear low-density polyethylene was large over the entire region of the film, a content of the linear low-density polyethylene was large near the film surface and heat-sealing strength was poor.

In Comparative example 6, although the core layer contained the linear low-density polyethylene, the laminate layer did not contain the linear low-density polyethylene. Therefore, bending pinhole resistance was poor.

In Comparative example 7, since high-pressure-processed low density polyethylene (LDPE) was added as polyethylene, heat-sealing strength was poor.

Table 1 and Table 2 indicate the results.

[Table 1]

| Item | | | | Example 1 | Example 2 | Example 3 | Example 4 | Example 6 | Example 6 | Example 7 |
|---|---|---|---|---|---|---|---|---|---|---|
| Thickness | | | μm | 30 | 60 | 30 | 30 | 30 | 30 | 30 |
| Sealing layer | PP-1 | | % by weight | 100 | 100 | 100 | 100 | 100 | 100 | 100 |
| | PP-2 | | % by weight | 0 | 0 | 0 | 0 | 0 | 0 | 0 |
| | LL-1 | | % by weight | 0 | 0 | 0 | 0 | 0 | 0 | 0 |
| | LL-2 | | % by weight | 0 | 0 | 0 | 0 | 0 | 0 | 0 |
| | Behenic acid amide | | ppm | 360 | 360 | 360 | 360 | 360 | 360 | 360 |
| | Silica particles | | ppm | 2000 | 2000 | 2000 | 2000 | 2000 | 2000 | 2000 |
| Core layer | PP-2 | | % by weight | 86 | 86 | 86 | 82 | 95 | 86 | 30 |
| | PP-3 | | % by weight | 0 | 0 | 0 | 0 | 0 | 0 | 56 |
| | LL-1 | | % by weight | 14 | 14 | 14 | 18 | 6 | 0 | 14 |
| | LL-2 | | % by weight | 0 | 0 | 0 | 0 | 0 | 14 | 0 |
| | LDPE-1 | | % by weight | 0 | 0 | 0 | 0 | 0 | 0 | 0 |
| | Behenic acid amide | | ppm | 270 | 270 | 270 | 270 | 270 | 270 | 270 |

| Item | | | Example 1 | Example 2 | Example 3 | Example 4 | Example 6 | Example 6 | Example 7 |
|---|---|---|---|---|---|---|---|---|---|
| Laminate layer | PP-2 | % by weight | 78 | 78 | 70 | 84 | 88 | 78 | 18 |
| | PP-3 | % by weight | 0 | 0 | 0 | 0 | 0 | 0 | 60 |
| | LL-1 | % by weight | 22 | 22 | 30 | 36 | 12 | 0 | 22 |
| | LL-2 | % by weight | 0 | 0 | 0 | 0 | 0 | 22 | 0 |
| | LDPE-1 | % by weight | 0 | 0 | 0 | 0 | 0 | 0 | 0 |
| Difference of content betwen linear low-density PE of core layer and linear low-density PE of sealing layer | | % by weight | 14 | 14 | 14 | 18 | 6 | 14 | 14 |
| Difference of content between linear low-density PE of laminate layer and linear low-density PE of core layer | | % by weight | 6 | 6 | 18 | 18 | 7 | 6 | 6 |
| Proportion of thickness of layer | Sealing layer | % by weight | 25 | 25 | 26 | 26 | 25 | 26 | 26 |
| | Core layer | % by weight | 60 | 60 | 60 | 50 | 50 | 60 | 60 |
| | Laminate layer | % by weight | 25 | 25 | 26 | 26 | 25 | 26 | 26 |
| Content of linear low-density PE in film | | % by weight | 12.5 | 12.5 | 14.5 | 18.0 | 5.5 | 12.5 | 12.6 |

EP 4 249 245 A1

(continued)

| Item | | | Example 1 | Example 2 | Example 3 | Example 4 | Example 6 | Example 6 | Example 7 |
|---|---|---|---|---|---|---|---|---|---|
| Film | Haze | % | 4.3 | 6.2 | 4.2 | 4.2 | 4.3 | 4.1 | 3.1 |
| | Coefficient of static friction | - | 0.36 | 0.38 | 0.37 | 0.36 | 0.36 | 0.36 | 0.36 |
| | Young's modulus/ longitudinal direction | MPa | 620 | 720 | 630 | 660 | 620 | 510 | 670 |
| | Young's modulus/width direction | MPa | 680 | 680 | 670 | 690 | 660 | 660 | 740 |
| | Plane orientation coefficient | - | 0.002 | 0.003 | 0.002 | 0.002 | 0.002 | 0.003 | 0.004 |
| | Wetting tension | mN/m | 43 | 43 | 43 | 43 | 43 | 43 | 43 |
| | Impact strength | J | 0.38 | 0.71 | 0.39 | 0.41 | 0.31 | 0.31 | 0.33 |
| | Accelerated blocking strength | mN/ 70mm | 84 | 48 | 37 | 46 | 31 | 86 | 30 |
| | Piercing strength | N | 1.9 | 2.4 | 1.9 | 2.0 | 1.8 | 1.9 | 2.0 |
| | Sealing start temperature | °C/4.9N | 126 | 131 | 126 | 126 | 126 | 126 | 138 |
| Multilayer body having nylon film stacked therein | Gelvo measured 1000 times at 1°C | piece | 16 | 20 | 16 | 12 | 19 | 17 | 20 |
| | Piercing strength | N | 15.1 | 15.6 | 15.2 | 15.4 | 15.1 | 16.0 | 16.4 |
| | 160°C sealing strength | N/16mm | 31.2 | 34.1 | 28.7 | 23.4 | 32.5 | 33.3 | 36.3 |
| Packaging bag | Bag breakage resistance at the time of falling at 5°C | times | 18 | 25 | 20 | 26 | 16 | 17 | 19 |

[Table 2]

| Item | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Thickness | | μm | 30 | 30 | 30 | 30 | 30 | 30 | 30 |
| Sealing layer | PP-1 | % by weight | 100 | 100 | 100 | 96 | 85.4 | 100 | 100 |
| | PP-2 | % by weight | 0 | 0 | 0 | 0 | 0 | 0 | 0 |
| | LL-1 | % by weight | 0 | 0 | 0 | 6 | 0 | 0 | 0 |
| | LL-2 | % by weight | 0 | 0 | 0 | 0 | 14.6 | 0 | 0 |
| | Behenic acid amide | ppm | 360 | 360 | 360 | 360 | 0 | 0 | 360 |
| | Silica particles | ppm | 2000 | 2000 | 2000 | 2000 | 0 | 5000 | 2000 |
| Core layer | PP-2 | % by weight | 100 | 80 | 80 | 86 | 85.4 | 0 | 70 |
| | PP-3 | % by weight | 0 | 0 | 0 | 0 | 0 | 85.4 | 0 |
| | LL-1 | % by weight | 0 | 20 | 10 | 15 | 0 | 14.6 | 0 |
| | LL-2 | % by weight | 0 | 0 | 10 | 0 | 14.6 | 0 | 0 |
| | LDPE-1 | % by weight | 0 | 0 | 0 | 0 | 0 | 0 | 30 |
| | Behenic acid amide | ppm | 270 | 270 | 270 | 270 | 270 | 270 | 270 |

(continued)

| | Item | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Laminate layer | PP-2 | % by weight | | 100 | 100 | 100 | 80 | 85.4 | 100 | 100 |
| | PP-3 | % by weight | | 0 | 0 | 0 | 0 | 0 | 0 | 0 |
| | LL-1 | % by weight | | 0 | 0 | 0 | 20 | 0 | 0 | 0 |
| | LL-2 | % by weight | | 0 | 0 | 0 | 0 | 14.6 | 0 | 0 |
| | LDPE-1 | % by weight | | 0 | 0 | 0 | 0 | 0 | 0 | 0 |
| Difference of content between linear low-density PE of core layer and linear low-density PE of sealing layer | | % by weight | | 0 | 20 | 20 | 10 | single layer | 14.6 | 30 |
| Difference of content between linear low-density PE of laminate layer and linear low-density PE of core layer | | % by weight | | 0 | -20 | -20 | 5 | | -14.6 | -30 |
| Proportion of thickness of layer | Sealing layer | % by weight | | 25 | 25 | 16 | 25 | | 10 | 25 |
| | Core layer | % by weight | | 50 | 50 | 60 | 50 | | 84 | 60 |
| | Laminate layer | % by weight | | 25 | 25 | 23 | 26 | | 6 | 25 |
| Content of linear low-density PE in film | | % by weight | | 0.0 | 10.0 | 12.0 | 12.5 | 15.5 | 12.3 | 15.0 |

(continued)

| Film | Item | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | Haze | % | 4.0 | 4.2 | 4.0 | 4.3 | 2.8 | 4.2 | 3.8 |
| | Coefficient of static friction | - | 0.37 | 0.36 | 0.38 | 0.37 | 0.35 | 0.31 | 0.32 |
| | Young's modulus/longitudinal direction | MPa | 490 | 500 | 620 | 620 | 490 | 530 | 580 |
| | Young's modulus/width direction | MPa | 620 | 650 | 630 | 640 | 620 | 680 | 610 |
| | Plane orientation coefficient | - | 0.003 | 0.003 | 0.002 | 0.002 | 0.002 | 0.003 | 0.003 |
| | Wetting tension | mN/m | 43 | 43 | 43 | 43 | 43 | 43 | 43 |
| | Impact strength | J | 0.35 | 0.33 | 0.31 | 0.33 | 0.35 | 0.35 | 0.33 |
| | Accelerated blocking strength | mN/70mm | 30 | 35 | 35 | 37 | 32 | 30 | 66 |
| | Piercing strength | N | 1.7 | 1.8 | 1.9 | 1.9 | 2.0 | 1.6 | 1.8 |
| | Sealing start temperature | °C/4.9N | 126 | 126 | 126 | 124 | 126 | 126 | 123 |

(continued)

| Item | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Multilayer body having nylon film stacked therein | Gelvo measured 1000 times at 1°C | piece | 48 | 18 | 20 | 15 | 18 | 38 | 16 |
| | Piercing strength | N | 13.9 | 14.2 | 14.9 | 15.1 | 15.2 | 14.1 | 15.0 |
| | 160°C sealing strength | N/ 15mm | 35.4 | 17.9 | 18.1 | 15.6 | 16.6 | 30.9 | 7.4 |
| Packaging bag | Bag breakage resistance at the time of falling at 5°C | times | 4 | 12 | 12 | 10 | 8 | 9 | 6 |

**INDUSTRIAL APPLICABILITY**

The present invention can provide the polyolefin resin film having high bag breakage resistance and bending pinhole resistance while having good low temperature sealability and high heat-sealing strength even when stacked with a base such as a biaxially oriented polyamide resin film having high strength, and greatly contribute to industries.

**Claims**

1.  A multilayer body comprising:

    a polyolefin resin film that satisfies the following 1) to 3) and includes a polypropylene resin composition that contains a propylene-α-olefin random copolymer; and
    a biaxially stretched nylon film, wherein
    the multilayer body satisfies the following 4) to 6),

        1) a sealing layer, a core layer, and a laminate layer are included in order, respectively,
        2) a content of linear low-density polyethylene in the polypropylene resin composition constituting the sealing layer is not larger than 3% by weight,
        3) a content of linear low-density polyethylene in the polypropylene resin composition constituting each of the core layer and the laminate layer is not smaller than 3% by weight and not larger than 50% by weight,
        4) the number of pinholes of the multilayer body is not larger than 35 after bending the multilayer body 1000 times at 1°C,
        5) the multilayer body has a piercing strength of not smaller than 10 N, and
        6) the multilayer body has a heat-sealing strength of not smaller than 20 N/15 mm.

2.  The multilayer body according to claim 1, wherein the polyolefin resin film has a Young's modulus of not smaller than 400 MPa and not larger than 800 MPa in a longitudinal direction and a width direction.

3.  The multilayer body according to claim 1 or 2, wherein the polyolefin resin film has a thickness of not smaller than 15 μm and not larger than 80 μm.

4.  The multilayer body according to any one of claims 1 to 3, wherein the linear low-density polyethylene has a density of not smaller than 910 g/m$^3$ and not larger than 935 g/m$^3$, and has a melt flow rate of not smaller than 2.0 g/10 min and not larger than 7.0 g/10 min.

5.  The multilayer body according to any one of claims 1 to 4, wherein the linear low-density polyethylene is linear low-density polyethylene obtained by polymerizing ethylene containing plant-derived ethylene.

6.  A packaging body using the multilayer body according to any one of claims 1 to 5.

## INTERNATIONAL SEARCH REPORT

| | International application No. |
|---|---|
| | **PCT/JP2021/040056** |

**A. CLASSIFICATION OF SUBJECT MATTER**

*B32B 27/32*(2006.01)i; *B32B 7/022*(2019.01)i; *B65D 65/02*(2006.01)i
FI: B32B27/32 D; B32B7/022; B32B27/32 E; B65D65/02 E

According to International Patent Classification (IPC) or to both national classification and IPC

**B. FIELDS SEARCHED**

Minimum documentation searched (classification system followed by classification symbols)

B32B27/32; B32B7/022; B65D65/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-103904 A (DAINIPPON INK & CHEM INC) 21 April 2005 (2005-04-21) claims 1-2, 9, paragraphs [0015], [0030], example 1 | 1-6 |
| P, A | JP 2021-066107 A (DAINIPPON PRINTING CO LTD) 30 April 2021 (2021-04-30) entire text, all drawings | 1-6 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 December 2021** | **28 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/040056**

| Patent document cited in search report | | | Publication date (day/month/year) | Patent family member(s) | Publication date (day/month/year) |
|---|---|---|---|---|---|
| JP | 2005-103904 | A | 21 April 2005 | (Family: none) | |
| JP | 2021-066107 | A | 30 April 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017132186 A

- JP 2020075400 A

**Non-patent literature cited in the description**

- Apparatus and Containers and Packaging. Food Sanitation Act. Ministry of Health and Welfare, 1982